# EUROPEAN PATENT APPLICATION

(11) **EP 4 699 850 A1**
(43) Date of publication of application: **25.02.2026**
(21) Application number: 25770225.8
(22) Date of filing: 01.04.2025
(51) Int. Cl.: B60L 15/20, B60L 7/10

(54) **ELECTRIC DRIVE ANTI-JERK CONTROL METHOD, MODULE, VEHICLE, AND COMPUTER STORAGE MEDIUM**

(30) Priority: 01.07.2024 CN 202410870595
(71) Applicant: Chery Automobile Co., Ltd., Wuhu, Anhui 241006 (CN)
(72) Inventor: MO, Chongxiang, Wuhu Anhui 241006 (CN); ZHOU, Chongguang, Wuhu Anhui 241006 (CN); QI, Keguang, Wuhu Anhui 241006 (CN); ZU, Guoxian, Wuhu Anhui 241006 (CN); ZHOU, Huanying, Wuhu Anhui 241006 (CN)
(74) Representative: Yang, Shu
(86) International application number: PCT/CN2025/086662
(87) International publication number: WO 2026/007481

(57) **Abstract**

The present application discloses an electric drive anti-jerk control method and module, a vehicle, and a computer storage medium. The method takes into account the jerking problem in various scenarios. For the scenario of switching operating conditions, in this method, when a torque output by a motor is controlled based on a target torque, the target torque is adjusted with a specified gradient, so as to improve the smoothness of the change of the torque output by the motor, thereby improving the jerking problem in this scenario. For the scenario of torque zero-crossing, in this method, a corresponding second anti-jerk torque and a corresponding third anti-jerk torque are set for an upward zero-crossing state and a downward zero-crossing state, respectively, to improve the jerking problem in this scenario. **In** addition, the method also takes into account a wheel speed difference anti-jerk torque, so as to compensate for jerking caused by wheel speed differences. For the jerking problem under various operating conditions, in the present application, corresponding methods for controlling the torque output by the motor are set, thereby improving the accuracy of the method, and then improving the anti-jerk effect.

## Description

This disclosure claims priority to Chinese Patent Application No. 202410870595.X, filed on July 1, 2024 and entitled "ELECTRIC DRIVE ANTI-JERK CONTROL METHOD AND MODULE, VEHICLE, AND COMPUTER STORAGE MEDIUM", the entire content of which is incorporated herein by reference.

### TECHNICAL FIELD

The present application relates to the field of vehicle technologies, and in particular to an electric drive anti-jerk control method and module, a vehicle, and a computer storage medium.

### BACKGROUND OF THE INVENTION

An electric drive system is a system that drives a vehicle.

The electric drive system in new energy vehicles not only drives the vehicle but also functions as a generator for energy recovery. The torque of the electric drive system may be positive or negative. Therefore, when the torque of the electric drive system switches between these two states, it will experience zero-crossing, which can easily cause vehicle jerking. Current electric drive anti-jerk control methods achieve this by controlling the torque change of the electric drive system during zero-crossing.

However, the above electric drive anti-jerk control method does not take into account the jerking problem under other operating conditions, resulting in poor anti-jerk effect.

### SUMMARY OF THE INVENTION

An embodiment of the present disclosure provides an electric drive anti-jerk control method and module, a vehicle, and a computer storage medium. The technical solution is as follows:

In a first aspect, an electric drive anti-jerk control method is provided. The method is applicable to a motor control unit of an electric drive system of a vehicle. The electric drive system further includes a motor. The method includes:
determining a first anti-jerk torque based on a maximum value among a torque corresponding to an operating condition of the vehicle and a gear torque, the operating condition of the vehicle including a driving condition, a recovery condition, and a braking condition, and the gear torque being a torque preset to limit a clearance in the motor's gears;
in response to a target torque of the motor being unequal to the first anti-jerk torque, controlling a torque output by the motor based on the target torque of the motor, and adjusting the target torque of the motor according to a specified gradient until the target torque of the motor is equal to the first anti-jerk torque, the target torque of the motor being a torque corresponding to the driving condition or the recovery condition of the motor;
in response to the target torque of the motor being equal to the first anti-jerk torque, determining whether the motor is in an upward zero-crossing state or a downward zero-crossing state according to an actual torque of the motor;
in response to the motor being in the upward zero-crossing state, determining a second anti-jerk torque based on a minimum value among the first anti-jerk torque, an upward zero-crossing torque, and a wheel speed difference anti-jerk torque, and controlling the torque output by the motor according to the second anti-jerk torque, the upward zero-crossing torque being a dynamic torque of the motor in the upward zero-crossing state, and the wheel speed difference anti-jerk torque being a torque preset to compensate for jerking caused by wheel speed differences;
in response to the motor being in the downward zero-crossing state, determining a third anti-jerk torque based on a maximum value among the target torque of the motor and a downward zero-crossing torque, and controlling the torque output by the motor according to the third anti-jerk torque, the downward zero-crossing torque being a dynamic torque of the motor in the downward zero-crossing state; and
in response to the motor not being in the upward zero-crossing state and the downward zero-crossing state, controlling the torque output by the motor based on the target torque of the motor.

Optionally, determining the first anti-jerk torque based on the maximum value among the torque corresponding to the operating condition of the vehicle and the gear torque includes:
in response to the vehicle being in the driving condition or the recovery condition, acquiring a normal target torque, the normal target torque being a torque corresponding to the driving condition or the recovery condition of the motor;
in response to the vehicle being in the braking condition, determining a braking target torque based on the vehicle's speed, the braking target torque being a torque corresponding to the motor in the braking condition;
determining the gear torque based on the vehicle's speed and the vehicle's driving direction; and
determining a maximum value among the normal target torque, the braking target torque, and the gear torque as the first anti-jerk torque.

Optionally, the specified gradient includes a specified ascending gradient and a specified descending gradient; and in response to the target torque of the motor being unequal to the first anti-jerk torque, controlling the torque output by the motor based on the target torque of the motor and adjusting the target torque of the motor according to the specified gradient until the target torque of the motor is equal to the first anti-jerk torque include:
in response to the first anti-jerk torque being greater than the target torque, controlling the torque output by the motor based on the target torque of the motor, and increasing the target torque of the motor according to the specified increasing gradient until the target torque of the motor is equal to the first anti-jerk torque; and
in response to the first anti-jerk torque being less than the target torque, controlling the torque output by the motor based on the target torque of the motor, and reducing the target torque of the motor according to the specified decreasing gradient until the target torque of the motor is equal to the first anti-jerk torque.

Optionally, in response to the first anti-jerk torque being greater than the target torque, controlling the torque output by the motor based on the target torque of the motor and increasing the target torque of the motor according to the specified increasing gradient until the target torque of the motor is equal to the first anti-jerk torque includes:
controlling the torque output by the motor based on the normal target torque;
in response to the first anti-jerk torque being greater than the target torque, increasing the target torque according to the specified increasing gradient to obtain the target torque increased for a first time, and controlling the torque output by the motor based on the target torque increased for the first time; and
increasing the target torque increased for an (n-1)^{th} time according to the specified increasing gradient to obtain the target torque increased for an n^{th} time (n > 2), until the target torque increased for the n^{th} time is equal to the first anti-jerk torque, and controlling the torque output by the motor based on the target torque increased for the n^{th} time.

Optionally, the vehicle includes a wheel end corresponding to the motor, and the motor is configured to drive the corresponding wheel end; and
in response to the motor being in the upward zero-crossing state, determining the second anti-jerk torque based on the minimum value among the first anti-jerk torque, the upward zero-crossing torque, and the wheel speed difference anti-jerk torque and controlling the torque output by the motor according to the second anti-jerk torque include:
in response to the motor being in the upward zero-crossing state, calibrating an upward zero-crossing torque gradient based on the actual torque of the motor and the vehicle's speed, the upward zero-crossing torque gradient being positively correlated with the vehicle's speed;
calculating a product of the upward zero-crossing torque gradient and a step time, and determining a sum of the actual torque of the motor and the product as the upward zero-crossing torque;
determining the wheel speed difference anti-jerk torque based on a speed difference of the wheel end corresponding to the motor, the wheel speed difference anti-jerk torque being negatively correlated with the speed difference of the wheel end corresponding to the motor;
determining the minimum value among the first anti-jerk torque, the upward zero-crossing torque, and the wheel speed difference anti-jerk torque as the second anti-jerk torque; and
controlling the torque output by the motor according to the second anti-jerk torque.

Optionally, in response to the motor being in the downward zero-crossing state, determining the third anti-jerk torque based on the maximum value among the target torque of the motor and the downward zero-crossing torque and controlling the torque output by the motor according to the third anti-jerk torque include:
in response to the motor being in the downward zero-crossing state, calibrating a downward zero-crossing torque gradient based on the actual torque of the motor and the vehicle's speed, the downward zero-crossing torque gradient being positively correlated with the vehicle's speed;
calculating a product of the downward zero-crossing torque gradient and a step time, and determining a difference between the actual torque of the motor and the product as a downward zero-crossing target torque;
determining a maximum value among the second anti-jerk torque and the downward zero-crossing target torque as the third anti-jerk torque; and
controlling the torque output by the motor according to the third anti-jerk torque.

Optionally, controlling the torque output by the motor based on the target torque of the motor includes:
determining a speed fluctuation denoising torque based on a fluctuation speed difference of the motor and a direction of change of the motor's speed, the fluctuation speed difference of the motor being a difference between an actual speed of the motor and a desired speed, the speed fluctuation denoising torque being configured to remove high-frequency jitter of the motor's speed, when the motor's speed is higher than a specified threshold, the speed fluctuation denoising torque being positive, and when the motor's speed is lower than the specified threshold, the speed fluctuation denoising torque being negative;
determining a difference between the target torque of the motor and the speed fluctuation denoising torque as a fourth anti-jerk torque; and
controlling the torque output by the motor according to the fourth anti-jerk torque;
controlling the torque output by the motor according to the second anti-jerk torque includes:
determining a difference between the second anti-jerk torque and the speed fluctuation denoising torque as the fourth anti-jerk torque; and
controlling the torque output by the motor according to the fourth anti-jerk torque; and
controlling the torque output by the motor according to the third anti-jerk torque includes:
determining a difference between the third anti-jerk torque and the speed fluctuation denoising torque as the fourth anti-jerk torque; and
controlling the torque output by the motor according to the fourth anti-jerk torque.

Optionally, controlling the torque output by the motor according to the fourth anti-jerk torque includes:
performing low-pass filtering on the fourth anti-jerk torque, and controlling the motor to output the fourth anti-jerk torque after low-pass filtering.

In a second aspect, an electric drive anti-jerk control module is provided. The electric drive anti-jerk control module includes:
a first determining submodule configured to determine a first anti-jerk torque based on a maximum value among a torque corresponding to an operating condition of the vehicle and a gear torque, the operating condition of the vehicle including a driving condition, a recovery condition, and a braking condition, and the gear torque being a torque preset to limit a clearance in the motor's gears;
a first control output submodule configured to, in response to a target torque of the motor being unequal to the first anti-jerk torque, control a torque output by the motor based on the target torque of the motor, and adjust the target torque of the motor according to a specified gradient until the target torque of the motor is equal to the first anti-jerk torque, the target torque of the motor being a torque corresponding to the driving condition or the recovery condition of the motor;
a second determining submodule configured to, in response to the target torque of the motor being equal to the first anti-jerk torque, determine whether the motor is in an upward zero-crossing state or a downward zero-crossing state according to an actual torque of the motor;
a second control output submodule configured to, in response to the motor being in the upward zero-crossing state, determine a second anti-jerk torque based on a minimum value among the first anti-jerk torque, an upward zero-crossing torque, and a wheel speed difference anti-jerk torque, and control the torque output by the motor according to the second anti-jerk torque, the upward zero-crossing torque being a dynamic torque of the motor in the upward zero-crossing state, and the wheel speed difference anti-jerk torque being a torque preset to compensate for jerking caused by wheel speed differences;
a third control output submodule configured to, in response to the motor being in the downward zero-crossing state, determine a third anti-jerk torque based on a maximum value among the target torque of the motor and the downward zero-crossing torque, and control the torque output by the motor according to the third anti-jerk torque, the downward zero-crossing torque being a dynamic torque of the motor in the downward zero-crossing state;
a fourth control output submodule configured to, in response to the motor not being in the upward zero-crossing state and the downward zero-crossing state, control the torque output by the motor based on the target torque of the motor.

In a third aspect, a vehicle is provided, which includes the above-mentioned electric drive anti-jerk control module and further includes a torque control chain, the torque control chain including an electric drive torque management unit, and the electric drive anti-jerk control module being nested in the electric drive torque management unit.

In a fourth aspect, a computer storage medium is provided, in which at least one instruction, at least one program, a code set or an instruction set is stored. The at least one instruction, the at least one program, the code set or the instruction set is loaded and executed by a motor control unit to implement any of the above-mentioned electric drive anti-jerk control methods.

The beneficial effects of the technical solutions provided in the embodiments of the present disclosure include at least the following.

An electric drive anti-jerk control method is provided, which takes into account the jerking problem in various scenarios. For the scenario of switching operating conditions, in this method, when a torque output by a motor is controlled based on a target torque, the target torque is adjusted with a specified gradient, so as to improve the smoothness of the change of the torque output by the motor, thereby improving the jerking problem in this scenario. For the scenario of torque zero-crossing, in this method, a corresponding second anti-jerk torque and a corresponding third anti-jerk torque are set for an upward zero-crossing state and a downward zero-crossing state, respectively, to improve the jerking problem in this scenario. In addition, the method also takes into account a wheel speed difference anti-jerk torque, so as to compensate for jerking caused by wheel speed differences. For the jerking problem under various operating conditions, in the present disclosure, corresponding methods for controlling the torque output by the motor are set, thereby improving the accuracy of the method, and then improving the anti-jerk effect.

### BRIEF DESCRIPTION OF DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a flow chart of an electric drive anti-jerk control method according to an embodiment of the present disclosure;
FIG. 2 is a flow chart of another electric drive anti-jerk control method according to an embodiment of the present disclosure;
FIG. 3 is a flow chart of another electric drive anti-jerk control method according to an embodiment of the present disclosure;
FIG. 4 is a flow chart of another electric drive anti-jerk control method according to an embodiment of the present disclosure;
FIG. 5 is a flow chart of another electric drive anti-jerk control method according to an embodiment of the present disclosure;
FIG. 6 is a schematic diagram of an algorithm structure of an electric drive anti-jerk control method according to an embodiment of the present disclosure;
FIG. 7 is a torque-time curve according to an embodiment of the present disclosure;
FIG. 8 is a speed-time curve according to an embodiment of the present disclosure;
FIG. 9 is another torque-time curve according to an embodiment of the present disclosure;
FIG. 10 is a schematic diagram of an electric drive anti-jerk control module according to an embodiment of the present disclosure; and
FIG. 11 is a schematic diagram of a torque control chain according to an embodiment of the present disclosure.

The above drawings illustrate specific embodiments of the present disclosure, which will be described in more detail below. These drawings and the textual description are not intended to limit the scope of the present disclosure in any way, but rather to illustrate the concepts of the present disclosure to those skilled in the art by reference to specific embodiments.

### DETAILED DESCRIPTION

For clearer descriptions of the objectives, technical solutions, and advantages of the present disclosure, embodiments of the present disclosure are described in detail hereinafter with reference to the accompanying drawings.

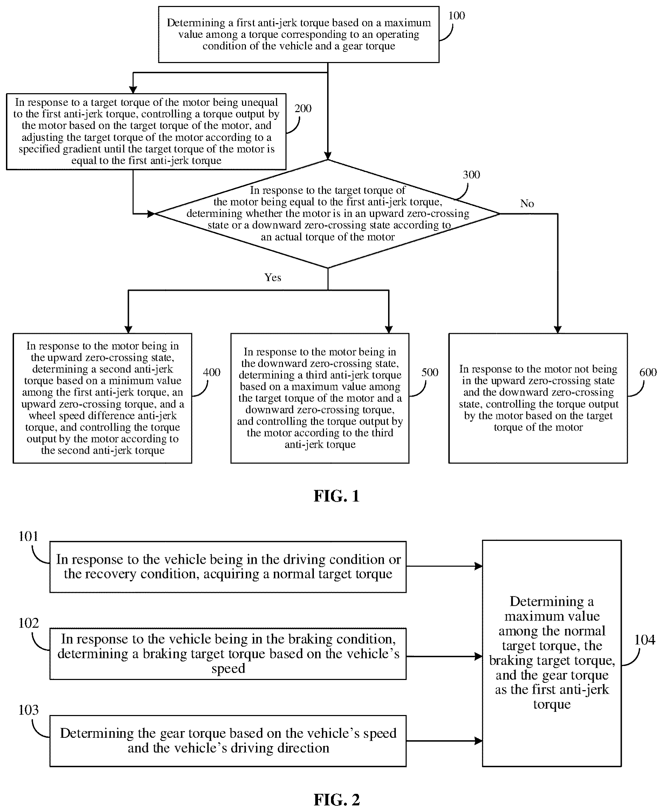

An embodiment of the present disclosure provides an electric drive anti-jerk control method. Please refer to FIG. 1, which is a flow chart of an electric drive anti-jerk control method according to an embodiment of the present disclosure. The method is applicable to a motor control unit of an electric drive system of a vehicle. The electric drive system further includes a motor. The method includes the following steps.

In step 100, a first anti-jerk torque is determined based on a maximum value among a torque corresponding to an operating condition of the vehicle and a gear torque.

The operating conditions of the vehicle include a driving condition, a recovery condition, and a braking condition, and the gear torque is a torque preset to limit a clearance in the motor's gears.

In step 200, in response to a target torque of the motor being unequal to the first anti-jerk torque, a torque output by the motor is controlled based on the target torque of the motor, and the target torque of the motor is adjusted according to a specified gradient until the target torque of the motor is equal to the first anti-jerk torque.

The target torque of the motor is a torque corresponding to the driving condition or the recovery condition of the motor.

In step 300, in response to the target torque of the motor being equal to the first anti-jerk torque, whether the motor is in an upward zero-crossing state or a downward zero-crossing state is determined according to an actual torque of the motor.

In step 400, in response to the motor being in the upward zero-crossing state, a second anti-jerk torque is determined based on a minimum value of the first anti-jerk torque, an upward zero-crossing torque, and a wheel speed difference anti-jerk torque, and the torque output by the motor is controlled according to the second anti-jerk torque.

The upward zero-crossing torque is a dynamic torque of the motor in the upward zero-crossing state, and the wheel speed difference anti-jerk torque is a preset torque to compensate for jerking caused by wheel speed differences.

In step 500, in response to the motor being in the downward zero-crossing state, a third anti-jerk torque is determined based on a maximum value among the target torque of the motor and a downward zero-crossing torque, and the torque output by the motor is controlled according to the third anti-jerk torque.

The downward zero-crossing torque is a dynamic torque of the motor in the downward zero-crossing state.

In step 600, in response to the motor not being in the upward zero-crossing state and the downward zero-crossing state, the torque output by the motor is controlled based on the target torque of the motor.

In summary, the present disclosure provides an electric drive anti-jerk control method, which takes into account the jerking problem in various scenarios. For the scenario of switching operating conditions, in this method, when a torque output by a motor is controlled based on a target torque, the target torque is adjusted with a specified gradient, so as to improve the smoothness of the change of the torque output by the motor, thereby improving the jerking problem in this scenario. For the scenario of torque zero-crossing, in this method, a corresponding second anti-jerk torque and a corresponding third anti-jerk torque are set for an upward zero-crossing state and a downward zero-crossing state, respectively, to improve the jerking problem in this scenario. In addition, the method also takes into account a wheel speed difference anti-jerk torque, so as to compensate for jerking caused by wheel speed differences. For the jerking problem under various operating conditions, in the present disclosure, corresponding methods for controlling the torque output by the motor are set, thereby improving the accuracy of the method, and then improving the anti-jerk effect.

Steps 100 to 600 are described in detail below.

The electric drive system according to the embodiment of the present disclosure may include a motor control unit, a motor, and a reduction gearbox. The motor is configured to convert electrical energy into mechanical energy to drive the vehicle, the motor control unit is configured to control the motor, and the reduction gearbox is configured to reduce the motor's speed and increase its output torque. The electric drive anti-jerk control method according to the embodiment of the present disclosure is applicable to the motor control unit of the electric drive system, so that the motor control unit can achieve anti-jerk effects for the vehicle by controlling the torque changes of the motor.

Optionally, step 100 may include a plurality of sub-steps. Please refer to FIG. 2, which is a flow chart of another electric drive anti-jerk control method according to an embodiment of the present disclosure. The method includes the following steps.

In step 101, in response to the vehicle being in the driving condition or the recovery condition, a normal target torque is acquired.

The motor control unit may acquire the normal target torque, which is a torque corresponding to the driving or recovery condition of the motor. The vehicle may include a plurality of motors. For example, the vehicle may include two motors, with front and rear output shafts corresponding to the two motors, respectively. The front and rear output shafts typically have different speed ratios, so the torques of the front and rear output shafts have a set ratio. The vehicle may further include a vehicle control unit (VCU), which may distribute a wheel-end torque according to the set ratio to obtain the normal target torques for the motors corresponding to the front and rear output shafts, and send the distributed wheel-end torques to the corresponding motor control units, allowing the motor control units to acquire the normal target torques.

The wheel-end torque is a torque at the vehicle's wheel end. It takes into account the gradient filtering of different modes and gears, the gradient filtering torque activated by related functions of the electronic stability program (ESP) (such as the anti-lock braking system (ABS), traction control system (TCS), and vehicle running dynamic control system (VDC)), the switching of recovery levels, and the impact of vehicle speed on torque changes.

In step 102, in response to the vehicle being in the braking condition, a braking target torque is determined based on the vehicle's speed.

The motor control unit may determine the target braking torque based on the vehicle's speed. The target braking torque is a torque corresponding to the braking condition of the motor. In the embodiment of the present disclosure, whether the vehicle is in the braking condition may be determined based on the state changes of the adaptive cruise control (ACC) system and other conditions such as vehicle speed. When the vehicle switches from the normal condition (driving condition or recovery condition) to the braking condition, anti-jerk control can be implemented based on the target braking torque.

In step 103, the gear torque is determined based on the vehicle's speed and the vehicle's driving direction.

The motor control unit may determine the gear torque based on the vehicle's speed and the vehicle's driving direction. This torque is a torque preset to limit a clearance in the motor's gears. In addition to the clearance in the motor's gears, a clearance may also exist in mechanical connections between the motor and the reduction gearbox, or between the reduction gearbox and the transmission axle. The gear torque may also be configured to limit the clearance in these connections.

The vehicle's driving direction may be configured to determine whether the vehicle is shifting gears. When the vehicle switches between a drive gear (Drive, D) and a reverse gear (Reverse, R), or when the motor's speed changes direction, gear clearance can easily lead to gear chattering. The gear torque can force the gears to be close together, thereby eliminating jerking caused by gear clearance. The magnitude of the gear torque may be determined based on vehicle speed. For example, the gear torque may be negatively correlated with vehicle speed, thereby improving the anti-jerk control accuracy of the gear torque. The magnitude of the gear torque may also be calibrated based on the minimum torque at which the gears are forced to be close together, which is not limited in the embodiment of the present disclosure.

In step 104, a maximum value among the normal target torque, the braking target torque, and the gear torque is determined as the first anti-jerk torque.

The first anti-jerk torque is determined by comparing the normal target torque, the braking target torque, and the gear torque. This first anti-jerk torque comprehensively accounts for jerking caused by operating condition switching and gear clearance, thereby improving the anti-jerk effect. When the vehicle is in the driving or recovery condition, the first anti-jerk torque is the normal target torque. Since the target torque of the motor and the normal target torque are both torques corresponding to the driving or recovery condition of the motor, the first anti-jerk torque is equal to the target torque of the motor, and step 30 may be performed. When the vehicle is in the braking condition, the first anti-jerk torque is the braking target torque. The first anti-jerk torque is not equal to the target torque of the motor, and step 20 may be performed. When the vehicle is shifting gears or the motor's speed is switching direction, the first anti-jerk torque is the gear torque. The first anti-jerk torque is not equal to the target torque of the motor, and step 20 may be performed.

Because the first anti-jerk torque takes into account the vehicle's operating condition and the gear torque, controlling the motor's torque changes based on the first anti-jerk torque effectively achieves anti-jerk in applications where the operating conditions change. If the first anti-jerk torque is not equal to the target torque of the motor, the target torque must be adjusted toward the braking target torque or gear torque. Adjusting the target torque of the motor according to a specified gradient achieves a gradient change in torque, thereby improving the smoothness of the torque change.

Optionally, the specified gradient includes a specified ascending gradient and a specified descending gradient. Step 200 may include a plurality of sub-steps.

In step 201, in response to the first anti-jerk torque being greater than the target torque, the torque output by the motor is controlled based on the target torque of the motor, and the target torque of the motor is increased according to the specified ascending gradient until the target torque of the motor is equal to the first anti-jerk torque.

In step 202, in response to the first anti-jerk torque being less than the target torque, the torque output by the motor is controlled based on the target torque of the motor, and the target torque of the motor is reduced according to the specified descending gradient until the target torque of the motor is equal to the first anti-jerk torque.

For step 201, the method for achieving a gradient change in the torque output by the motor may include the following.
1) The torque output by the motor is controlled based on the normal target torque.
   The motor control unit may control the torque output by the motor based on the normal target torque, and subsequent gradient changes are adjusted based on the normal target torque. For example, when the motor switches from the driving condition to the braking condition, the torque output by the motor is first controlled based on the normal target torque to ensure normal motor drive.
2) In response to the first anti-jerk torque being greater than the target torque, the initial target torque is increased according to the specified ascending gradient to obtain the target torque increased for a first time, and the torque output by the motor is controlled based on the target torque increased for the first time.
   The motor control unit may calculate the target torque after each increase and control the motor to output the target torque after each increase in real time, thereby facilitating gradient change control of the motor's final output torque. The specified ascending gradient may be a preset value and may be positively correlated with a difference between the first anti-jerk torque and the target torque.
3) The target torque after the last increase is increased according to the specified ascending gradient to obtain the target torque after an n^{th} increase (n > 2), until the target torque after the n^{th} increase is equal to the first anti-jerk torque, and the torque output by the motor is controlled based on the target torque after the n^{th} increase.

The motor control unit may implement gradient change control of the motor's final output torque by performing a plurality of increases in the target torque calculation, with each increase calculated based on the target torque after the previous increase. The number n may be positively correlated with the difference between the first anti-jerk torque and the target torque. Specifically, a larger n is set as the difference between the first anti-jerk torque and the target torque increases, thereby improving the smoothness of the change in the motor's final output torque.

Step 202 may refer to step 201, which will not be repeated in the embodiment of the present disclosure.

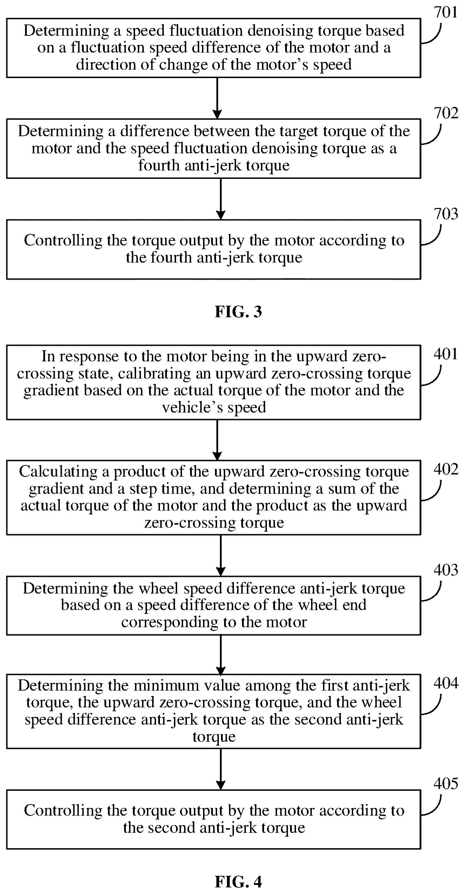

Alternatively, the target torque may be directly output or processed before output in the embodiment of the present disclosure. Please refer to FIG. 3, which is a flow chart of another electric drive anti-jerk control method according to an embodiment of the present disclosure. The target torque may be de-noised using a speed fluctuation denoising torque to eliminate jerking caused by motor speed fluctuations.

Controlling the torque output by the motor based on the target torque of the motor includes the following.

In step 701, a speed fluctuation denoising torque is determined based on the motor's fluctuating speed difference and a direction of change of the motor's speed.

When the motor's speed fluctuates, the motor control unit may determine the speed fluctuation denoising torque based on the motor's fluctuating speed difference and the direction of change of the motor's speed. When the motor's speed fluctuates, the speed fluctuation denoising torque may be zero. The motor's fluctuating speed difference is a difference between the motor's actual speed and a desired speed. The speed fluctuation denoising torque is configured to remove high-frequency jerking from the motor's speed. When the motor's speed is above a specified threshold, the speed fluctuation denoising torque is positive, and when the motor's speed is below the specified threshold, the speed fluctuation denoising torque is negative.

In step 702, a difference between the target torque of the motor and the speed fluctuation denoising torque is determined as a fourth anti-jerk torque.

The motor control unit may subtract the speed fluctuation denoising torque from the target torque to eliminate high-frequency motor speed jerking that may cause vehicle jerking. When the motor's speed exceeds the specified threshold, the target torque may be reduced, and when the motor's speed falls below the specified threshold, the target torque may be increased.

In step 703, the torque output by the motor is controlled according to the fourth anti-jerk torque.

The motor control unit may control the motor to output the fourth anti-jerk torque, so the torque finally output by the motor can not only take into account the vehicle jerking problem during operating condition switching, and the vehicle jerking problem during gear shifting or direction switching of the motor's speed, but also take into account the vehicle jerking problem during high-frequency jerking of the motor's speed, thereby further improving the anti-jerk effect.

Optionally, in the embodiment of the present disclosure, low-pass filtering may be performed on the fourth anti-jerk torque and the motor is controlled to output the low-pass filtered fourth anti-jerk torque. Low-pass filtering can attenuate high-frequency signals exceeding a set threshold, thereby improving the smoothness of the changes and transitions in the torque output by the motor under different conditions, thereby enhancing the anti-jerk effect.

There are two situations in which the first anti-jerk torque is equal to the target torque of the motor. One is when the first anti-jerk torque is the normal target torque. Since the target torque of the motor and the normal target torque are both a torque corresponding to the driving condition or the recovery condition of the motor, the first anti-jerk torque is equal to the target torque of the motor. The other is that after step 200, the target torque of the electric drive is also equal to the first anti-jerk torque after a gradient increase or decrease. After these two situations, reference may be made to step 300 to determine whether the motor is in an upward zero-crossing state or a downward zero-crossing state, and torque control is further performed for a specific state. The upward zero-crossing state and the downward zero-crossing state are prone to gear collision, resulting in jerking problems.

Optionally, step 400 may include a plurality of sub-steps. Please refer to FIG. 4, which is a flow chart of another electric drive anti-jerk control method according to an embodiment of the present disclosure. The vehicle includes a wheel end corresponding to the motor, and the motor is configured to drive the corresponding wheel end. The method includes the following steps.

In step 401, in response to the motor being in the upward zero-crossing state, an upward zero-crossing torque gradient is calibrated based on the actual torque of the motor and the vehicle's speed.

The motor control unit may calibrate the upward zero-crossing torque gradient. The upward zero-crossing state refers to a state in which the torque output by the motor transitions from negative torque to positive torque when the motor switches from the recovery condition to the driving condition. In the embodiment of the present disclosure, the upward zero-crossing state may be determined based on the target torque and actual torque of the motor. For example, a zero-crossing interval may be preset. When the target torque and actual torque of the motor are in the zero-crossing interval, the upward zero-crossing state may be determined by determining the positive and negative nature of the target torque and actual torque of the motor. The upward zero-crossing torque gradient is a change gradient of the torque in the upward zero-crossing state. The upward zero-crossing torque gradient may be a preset value. The upward zero-crossing torque gradient is positively correlated with the vehicle's speed. By calibrating the upward zero-crossing torque gradient based on the actual torque of the motor and the vehicle's speed, the accuracy of the upward zero-crossing torque gradient can be improved.

In step 402, a product of the upward zero-crossing torque gradient and a step time is calculated, and a sum of the actual torque of the motor and the product is determined as the upward zero-crossing torque.

The motor control unit may determine the upward zero-crossing torque. By adding the motor's actual torque to the product of the upward zero-crossing torque gradient and the step time, the torques output by the motor at a plurality of moments may be determined. The upward zero-crossing torque can slow the motor's torque direction switching process, thereby improving jerking during the upward zero-crossing state.

In step 403, the wheel speed difference anti-jerk torque is determined based on a speed difference of the wheel end corresponding to the motor.

The motor control unit may determine the wheel speed difference anti-jerk torque. In skidding scenarios, when there's a speed difference between the left and right wheel ends corresponding to the motors, the motor control unit may use the wheel speed difference anti-jerk torque to limit jerking in this scenario. The wheel speed difference anti-jerk torque is negatively correlated with the speed difference between the motors' corresponding wheel ends, improving the accuracy of the wheel speed difference anti-jerk torque.

In step 404, a minimum value among the first anti-jerk torque, the upward zero-crossing torque, and the wheel speed difference anti-jerk torque is determined as the second anti-jerk torque.

The motor control unit may determine the second anti-jerk torque, which is the minimum value among the first anti-jerk torque, the upward zero-crossing torque, and the wheel speed difference anti-jerk torque. This ensures minimal torque variation in the upward zero-crossing state. This second anti-jerk torque comprehensively considers anti-jerk issues in the upward zero-crossing state as well as anti-jerk issues during vehicle skidding or turning, improving the anti-jerk effect.

In step 405, the torque output by the motor is controlled according to the second anti-jerk torque.

Optionally, in the embodiment of the present disclosure, the second anti-jerk torque may be directly output, or the second anti-jerk torque may be processed and then the motor is controlled to output the processed second anti-jerk torque. The specific method may include the following.
1) The difference between the second anti-jerk torque and the speed fluctuation denoising torque is determined as the fourth anti-jerk torque.
2) The torque output by the motor is controlled according to the fourth anti-jerk torque.
3) Low-pass filtering is performed on the fourth anti-jerk torque, and the motor is controlled to output the fourth anti-jerk torque after low-pass filtering.

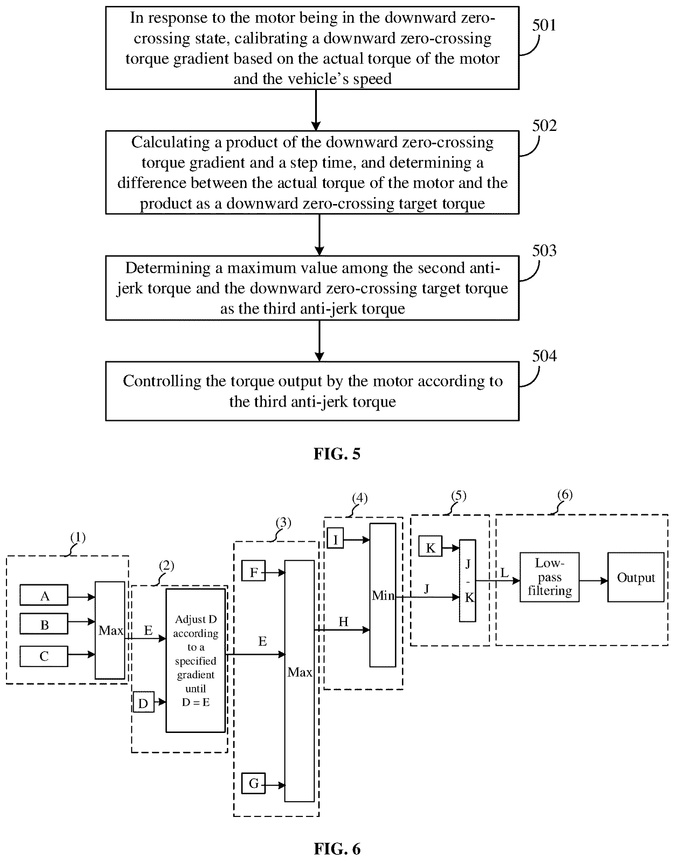

Optionally, step 500 may include a plurality of sub-steps. Please refer to FIG. 5, which is a flow chart of another electric drive anti-jerk control method according to an embodiment of the present disclosure. The method includes the following steps.

In step 501, in response to the motor being in the downward zero-crossing state, a downward zero-crossing torque gradient is calibrated based on the actual torque of the motor and the vehicle's speed.

The motor control unit may calibrate the downward zero-crossing torque gradient. The downward zero-crossing state refers to a state in which the torque output by the motor transitions from positive torque to negative torque when the motor switches from the driving condition to the recovery condition. In the embodiment of the present disclosure, the downward zero-crossing state may be determined based on the target torque and actual torque of the motor. The downward zero-crossing torque gradient is the gradient of the torque change in the downward zero-crossing state. The downward zero-crossing torque gradient is positively correlated with the vehicle's speed. By calibrating the downward zero-crossing torque gradient based on the actual torque of the motor and the vehicle's speed, the accuracy of the downward zero-crossing torque gradient can be improved.

In step 502, a product of the downward zero-crossing torque gradient and a step time is calculated, and a difference between the actual torque of the motor and the product is determined as the downward zero-crossing target torque.

The motor control unit may determine the downward zero-crossing torque and may determine the torques output by the motor at a plurality of moment by subtracting the product of the downward zero-crossing torque gradient and the step time from the motor's actual torque. The downward zero-crossing torque can slow the motor's torque direction switching process, thereby improving jerking in the downward zero-crossing state.

In step 503, a maximum value among the target torque of the motor and the downward zero-crossing target torque is determined as the third anti-jerk torque.

The motor control unit may determine the third anti-jerk torque. Since the output torque changes toward negative torque in the downward zero-crossing state, the third anti-jerk torque is the maximum value among the target torque of the motor and the downward zero-crossing target torque. This ensures minimal torque variation in the downward zero-crossing state. This third anti-jerk torque takes into account anti-jerk issues in the downward zero-crossing state, improving the anti-jerk effect.

In step 504, the torque output by the motor is controlled according to the third anti-jerk torque.

Optionally, in the embodiment of the present disclosure, the third anti-jerk torque may be directly output, or the third anti-jerk torque may be processed and then the motor is controlled to output the processed third anti-jerk torque. The specific method may include the following.
1) The difference between the third anti-jerk torque and the speed fluctuation denoising torque is determined as the fourth anti-jerk torque.
2) The torque output by the motor is controlled according to the fourth anti-jerk torque.
3) Low-pass filtering is performed on the fourth anti-jerk torque, and the motor is controlled to output the fourth anti-jerk torque after low-pass filtering.

Step 600 corresponds to a normal operating condition. Since the motor is not in the upward zero-crossing state or the downward zero-crossing state, the torque output by the motor may be controlled based on the target torque of the motor. In the embodiment of the present disclosure, the target torque may be directly output or processed before output. For the specific method, reference may be made to FIG. 3.

An embodiment of the present disclosure provides an algorithm structure of an electric drive anti-jerk control method. Please refer to FIG. 6, which is a schematic diagram of the algorithm structure of an electric drive anti-jerk control method according to an embodiment of the present disclosure. The algorithm structure may calculate and process a plurality of torques in a certain order to determine the torque finally output by the motor. The plurality of torques include: normal target torque A, braking target torque B, gear torque C, motor target torque D, first anti-jerk torque E, upward zero-crossing torque F, wheel speed difference anti-jerk torque G, second anti-jerk torque H, downward zero-crossing target torque I, third anti-jerk torque J, speed fluctuation denoising torque K, and fourth anti-jerk torque L.

The following is an explanation of the calculation steps for the plurality of torques:
(1) The maximum value among the normal target torque A, the braking target torque B, and the gear torque C is calculated to determine the first anti-jerk torque E. For the specific method, reference may be made to steps 101 to 104 shown in FIG. 2.
   The motor control unit may determine the order in which it calculates the plurality of torques based on the occurrence frequency of each torque's application scenario. For example, jerking caused by operating condition switching or gear clearance is more common during vehicle driving, so the calculation of the normal target torque A, the braking target torque B, and the gear torque C is placed first.
(2) The target torque D of the motor is adjusted according to the specified gradient so that the target torque D is equal to the first anti-jerk torque E. For the specific method, reference may be made to step 201 and step 202 shown in FIG. 2.
   When the target torque D is not equal to the first anti-jerk torque E, the motor control unit may adjust the target torque D according to the specified gradient. When the target torque D is equal to the first anti-jerk torque E, the motor control unit may use the first anti-jerk torque E for subsequent calculations.
(3) The minimum value among the first anti-jerk torque E, the upward zero-crossing torque F, and the wheel speed difference anti-jerk torque G is calculated to determine the second anti-jerk torque H. For the specific method, reference may be made to steps 401 to 404.
(4) The maximum value among the second anti-jerk torque H and the downward zero-crossing target torque I is calculated to determine the third anti-jerk torque J. For the specific method, reference may be made to steps 501 to 503.
   The order in which the motor control unit calculates the torque corresponding to the upward zero-crossing state or the downward zero-crossing state may be swapped.
(5) The difference between the third anti-jerk torque J and the speed fluctuation denoising torque K is calculated to determine the fourth anti-jerk torque L. For the specific method, reference may be made to steps 701 and 702.
   When the motor's speed is fluctuating at high frequency, the speed fluctuation denoising torque L needs to be subtracted to remove jerking caused by the motor's speed fluctuation. Therefore, the torque that plays a major role in the current stage needs to be determined first. Therefore, the calculation of the speed fluctuation denoising torque K is placed before the final low-pass filtering process.
(6) Low-pass filtering is performed on the fourth anti-jerk torque L.

The motor control unit may perform low-pass filtering on the fourth anti-jerk torque L, which can weaken high-frequency signals that exceed a set critical value. Therefore, placing the low-pass filtering process in the last step can improve the smoothness of the changes and transitions in the torque output by the motor under different circumstances, so that the torque changes in the time stages corresponding to a plurality of application scenarios can be connected.

Controlling the jerking problem of the entire vehicle through this algorithm structure can take into account the application scenarios corresponding to the various operating conditions in the above-mentioned embodiments, thereby effectively improving the anti-jerk effect.

It should be noted that the plurality of torques in this algorithm structure are not present in every stage. For example, in response to the motor being in the upward zero-crossing state, the upward zero-crossing torque F is activated. In response to a speed difference between the left and right wheel ends, that is, in the scenario of vehicle skidding or turning, the wheel speed difference anti-jerk torque G is activated. The second anti-jerk torque H may then be determined by comparing the first anti-jerk torque E, the upward zero-crossing torque F, and the wheel speed difference anti-jerk torque G. If neither the upward zero-crossing torque F nor the wheel speed difference anti-jerk torque G is activated, the first anti-jerk torque E is determined as the second anti-jerk torque H, and the next calculation is performed. For other torque activation methods, reference may be made to the control method according to the above embodiments, which will not be repeated in the embodiment of the present disclosure.

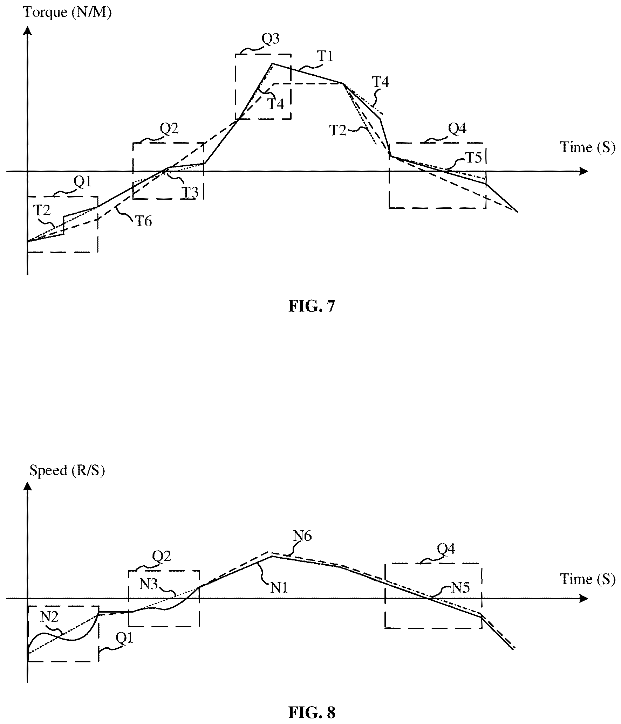

To clearly illustrate the application effects of the electric drive anti-jerk control method in different application scenarios, reference may be made to FIGS. 7 and 7. FIG. 8 is a torque-time curve according to an embodiment of the present disclosure. FIG. 8 is a speed-time curve according to an embodiment of the present disclosure. The horizontal axis of FIG. 7 is time in seconds (s), and the vertical axis is torque in Newton- meters (N· m). The horizontal axis of FIG. 8 is time in seconds, and the vertical axis is speed in revolutions per second (r/ s). FIG. 8 may be a speed-time curve corresponding to the torque-time curve shown in FIG. 7, that is, the time in FIGS. 8 and 7 may correspond. T1 is the final torque output by the motor, T6 is the target torque of the motor, and N1 is the final speed output by the motor.

The motor's speed fluctuates during phases corresponding to first and second regions Q1 and Q2. The first region Q1 is an application scenario of the braking condition and motor speed fluctuations. In this scenario, the final output torque T1 is calculated by subtracting the speed fluctuation denoising torque from the braking target torque T2. Correspondingly, N2 represents the target motor speed for this scenario.

The second region Q2 is an application scenario of the upward zero-crossing state and motor speed jerking. In this scenario, the final output torque T1 is obtained by subtracting the speed fluctuation denoising torque from the upward zero-crossing torque T3. Correspondingly, N3 is the target motor speed in this scenario.

The third region Q3 is an application scenario of vehicle skidding or turning. In this scenario, the final output torque T1 is obtained based on the wheel speed difference anti-jerk torque T4. Correspondingly, N6 is the target speed of the motor in this scenario.

The fourth region Q4 is an application scenario of the downward zero-crossing state. In this scenario, since there is no motor speed fluctuation, the final output torque T1 is obtained based on the downward zero-crossing torque T5. Correspondingly, N5 is the target speed of the motor in this scenario.

FIG. 7 shows torque changes in a plurality of application scenarios. In the embodiment of the present disclosure, low-pass filtering is performed on the torque so that the torque changes in the time stages corresponding to the plurality of application scenarios can be connected.

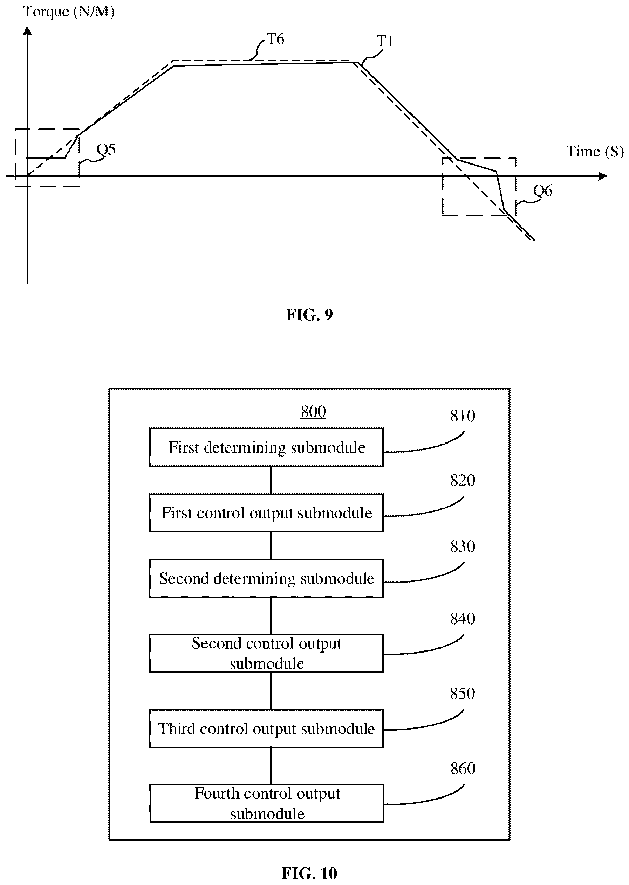

Please refer to FIG. 9, which is another torque-time curve according to an embodiment of the present disclosure. FIG. 9 shows two scenarios in which the torque exhibits a gradient change. The fifth region Q5 is an application scenario when the vehicle switches between forward and reverse gears, or when the motor's speed switches direction. In this scenario, due to the presence of gear clearance, the final output torque T1 is obtained based on the gear torque. For the specific process, reference may be made to step 201. The sixth region Q6 is an application scenario in the downward zero-crossing state. In this scenario, the final output torque T1 is obtained based on the downward zero-crossing torque. For the specific process, reference may be made to step 502. In the above two application scenarios, the final output torque T1 exhibits a gradient change, which can slow down the torque change process, thereby achieving anti-jerk.

In summary, the present disclosure provides an electric drive anti-jerk control method, which takes into account the jerking problem in various scenarios. For the scenario of switching operating conditions, in this method, when a torque output by a motor is controlled based on a target torque, the target torque is adjusted with a specified gradient, so as to improve the smoothness of the change of the torque output by the motor, thereby improving the jerking problem in this scenario. For the scenario of torque zero-crossing, in this method, a corresponding second anti-jerk torque and a corresponding third anti-jerk torque are set for an upward zero-crossing state and a downward zero-crossing state, respectively, to improve the jerking problem in this scenario. In addition, the method also takes into account a wheel speed difference anti-jerk torque, so as to compensate for jerking caused by wheel speed differences. For the jerking problem under various operating conditions, in the present disclosure, corresponding methods for controlling the torque output by the motor are set, thereby improving the accuracy of the method, and then improving the anti-jerk effect.

On the other hand, an embodiment of the present disclosure provides an electric drive anti-jerk control module. Please refer to FIG. 10, which is a schematic diagram of an electric drive anti-jerk control module according to an embodiment of the present disclosure. The electric drive anti-jerk control module 800 includes the following submodules.

A first determination submodule 810 is configured to determine a first anti-jerk torque based on a maximum value among a torque corresponding to an operating condition of a vehicle and a gear torque, the operating condition of the vehicle including a driving condition, a recovery condition, and a braking condition, and the gear torque being a torque preset to limit a clearance in the motor's gears.

A first control output submodule 820 is configured to, in response to a target torque of the motor being unequal to the first anti-jerk torque, control a torque output by the motor based on the target torque of the motor, and adjust the target torque of the motor according to a specified gradient until the target torque of the motor is equal to the first anti-jerk torque, the target torque of the motor being a torque corresponding to the driving condition or the recovery condition of the motor.

A second determining submodule 830 is configured to, in response to the target torque of the motor being equal to the first anti-jerk torque, determine whether the motor is in an upward zero-crossing state or a downward zero-crossing state according to an actual torque of the motor.

A second control output submodule 840 is configured to, in response to the motor being in the upward zero-crossing state, determine a second anti-jerk torque based on a minimum value among the first anti-jerk torque, an upward zero-crossing torque, and a wheel speed difference anti-jerk torque, and control the torque output by the motor according to the second anti-jerk torque, the upward zero-crossing torque being a dynamic torque of the motor in the upward zero-crossing state, and the wheel speed difference anti-jerk torque being a torque preset to compensate for jerking caused by wheel speed differences.

A third control output submodule 850 is configured to, in response to the motor being in the downward zero-crossing state, determine a third anti-jerk torque based on a maximum value among the target torque of the motor and the downward zero-crossing torque, and control the torque output by the motor according to the third anti-jerk torque, the downward zero-crossing torque being a dynamic torque of the motor in the downward zero-crossing state.

A fourth control output submodule 860 is configured to, in response to the motor not being in the upward zero-crossing state and the downward zero-crossing state, control the torque output by the motor based on the target torque of the motor.

In summary, the present disclosure provides an electric drive anti-jerk control module, which takes into account the jerking problem in various scenarios. For the scenario of switching operating conditions, in this method, when a torque output by a motor is controlled based on a target torque, the target torque is adjusted with a specified gradient, so as to improve the smoothness of the change of the torque output by the motor, thereby improving the jerking problem in this scenario. For the scenario of torque zero-crossing, in this method, a corresponding second anti-jerk torque and a corresponding third anti-jerk torque are set for an upward zero-crossing state and a downward zero-crossing state, respectively, to improve the jerking problem in this scenario. In addition, the method also takes into account a wheel speed difference anti-jerk torque, so as to compensate for jerking caused by wheel speed differences. For the jerking problem under various operating conditions, in the present disclosure, corresponding methods for controlling the torque output by the motor are set, thereby improving the accuracy of the method, and then improving the anti-jerk effect.

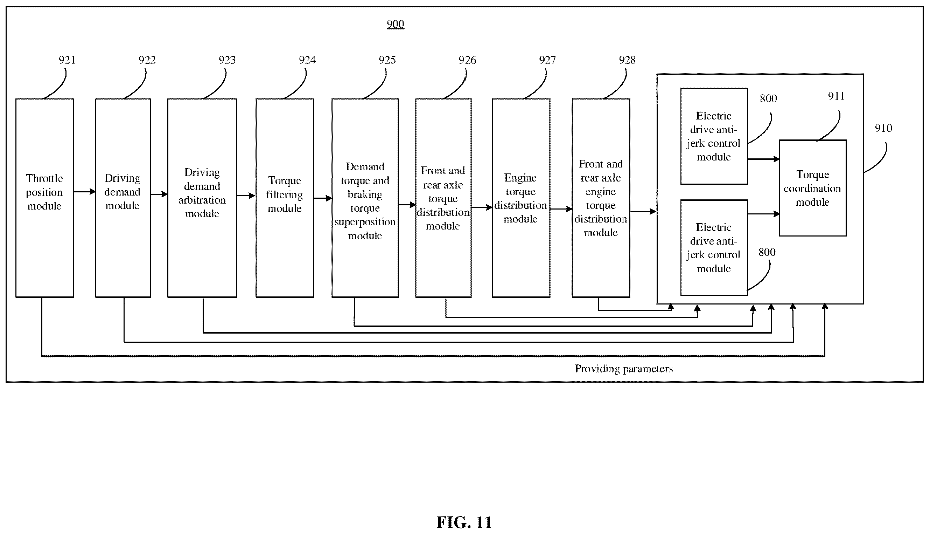

On the other hand, an embodiment of the present disclosure provides a vehicle, which includes the electric drive anti-jerk control module in the above embodiment and further includes a torque control chain. Please refer to FIG. 11, which is a schematic diagram of a torque control chain according to an embodiment of the present disclosure. The torque control chain 900 includes an electric drive torque management unit 910, and the electric drive anti-jerk control module 800 shown in FIG. 10 is nested in the electric drive torque management unit 910. The electric drive torque management unit 910 is disposed at the end of the torque control chain 900. The electric drive torque management unit 910 may distribute the wheel-end torque and send the distributed wheel-end torque to the corresponding motor control unit. The electric drive anti-jerk control module 800 may then calculate the distributed wheel-end torque and ultimately output it to a torque coordination module 911. The torque control chain 900 further includes a plurality of front-end modules, such as a throttle position module 921, a driving demand module 922, a driving demand arbitration module 923, a torque filtering module 924, a demand torque and brake torque superposition module 925, a front and rear axle torque distribution module 926, an engine torque distribution module 927, and a front and rear axle motor torque distribution module 928. The plurality of front-end modules may provide various parameters to the electric drive torque management unit 910. For example, the driving demand module 922 may provide parameters such as vehicle speed, driving mode, and driving direction, so that the electric drive anti-jerk control module 800 can calculate the distributed wheel-end torque.

On the other hand, a computer storage medium is provided, in which at least one instruction, at least one program, code set or instruction set is stored. The at least one instruction, at least one program, code set or instruction set is loaded and executed by a motor control unit to implement the electric drive anti-jerk control method as described in the above embodiment.

In the present disclosure, the terms "first", "second", "third", "fourth", "fifth" and "sixth" are used for descriptive purposes only and should not be understood as indicating or implying relative importance. The term "plural" refers to two or more, unless otherwise expressly limited.

In the several embodiments provided in the present disclosure, it should be understood that the disclosed devices and methods may be implemented in other ways. For example, the device embodiments described above are merely schematic. For example, the division of the units is merely a logical function division. In actual implementation, there may be other division methods, such as a plurality of units or components may be combined or integrated into another system, or some features may be ignored or not executed. Another point is that the mutual coupling or direct coupling or communication connection shown or discussed may be through some interfaces, indirect coupling or communication connection of devices or units, which may be electrical, mechanical or other forms.

The units described as separate components may or may not be physically separate, and the components shown as units may or may not be physical units, that is, they may be disposed in one place or distributed across a plurality of network units. Some or all of these units may be selected to achieve the purpose of this embodiment according to actual needs.

Those skilled in the art will understand that all or part of the steps to implement the above embodiments may be accomplished by hardware, or by a program to instruct the relevant hardware, and the program may be stored in a computer-readable storage medium, which may be a read-only memory, a disk, or an optical disk, etc.

Described above are merely exemplary embodiments of the present application, and are not intended to limit the present application. Within the spirit and principles of the application, any modifications, equivalent substitutions, improvements, and the like are within the protection scope of the present application.

## Claims

1. An electric drive anti-jerk control method, wherein the method is applicable to a motor control unit of an electric drive system of a vehicle, the electric drive system further comprising a motor, the method comprising:
determining a first anti-jerk torque based on a maximum value among a torque corresponding to an operating condition of the vehicle and a gear torque, the operating condition of the vehicle comprising a driving condition, a recovery condition, and a braking condition, and the gear torque being a torque preset to limit a clearance in the motor's gears;
in response to a target torque of the motor being unequal to the first anti-jerk torque, controlling a torque output by the motor based on the target torque of the motor, and adjusting the target torque of the motor according to a specified gradient until the target torque of the motor is equal to the first anti-jerk torque, the target torque of the motor being a torque corresponding to the driving condition or the recovery condition of the motor;
in response to the target torque of the motor being equal to the first anti-jerk torque, determining whether the motor is in an upward zero-crossing state or a downward zero-crossing state according to an actual torque of the motor;
in response to the motor being in the upward zero-crossing state, determining a second anti-jerk torque based on a minimum value among the first anti-jerk torque, an upward zero-crossing torque, and a wheel speed difference anti-jerk torque, and controlling the torque output by the motor according to the second anti-jerk torque, the upward zero-crossing torque being a dynamic torque of the motor in the upward zero-crossing state, and the wheel speed difference anti-jerk torque being a torque preset to compensate for jerking caused by wheel speed differences;
in response to the motor being in the downward zero-crossing state, determining a third anti-jerk torque based on a maximum value among the target torque of the motor and a downward zero-crossing torque, and controlling the torque output by the motor according to the third anti-jerk torque, the downward zero-crossing torque being a dynamic torque of the motor in the downward zero-crossing state; and
in response to the motor not being in the upward zero-crossing state and the downward zero-crossing state, controlling the torque output by the motor based on the target torque of the motor.

2. The electric drive anti-jerk control method according to claim 1, wherein determining the first anti-jerk torque based on the maximum value among the torque corresponding to the operating condition of the vehicle and the gear torque comprises:
in response to the vehicle being in the driving condition or the recovery condition, acquiring a normal target torque, the normal target torque being a torque corresponding to the driving condition or the recovery condition of the motor;
in response to the vehicle being in the braking condition, determining a braking target torque based on the vehicle's speed, the braking target torque being a torque corresponding to the braking condition of the motor;
determining the gear torque based on the vehicle's speed and the vehicle's driving direction; and
determining a maximum value among the normal target torque, the braking target torque, and the gear torque as the first anti-jerk torque.

3. The electric drive anti-jerk control method according to claim 2, wherein the specified gradient comprises a specified ascending gradient and a specified descending gradient; and in response to the target torque of the motor being unequal to the first anti-jerk torque, controlling the torque output by the motor based on the target torque of the motor and adjusting the target torque of the motor according to the specified gradient until the target torque of the motor is equal to the first anti-jerk torque comprise:
in response to the first anti-jerk torque being greater than the target torque, controlling the torque output by the motor based on the target torque of the motor, and increasing the target torque of the motor according to the specified ascending gradient until the target torque of the motor is equal to the first anti-jerk torque; and
in response to the first anti-jerk torque being less than the target torque, controlling the torque output by the motor based on the target torque of the motor, and reducing the target torque of the motor according to the specified descending gradient until the target torque of the motor is equal to the first anti-jerk torque.

4. The electric drive anti-jerk control method according to claim 3, wherein, in response to the first anti-jerk torque being greater than the target torque, controlling the torque output by the motor based on the target torque of the motor and increasing the target torque of the motor according to the specified ascending gradient until the target torque of the motor is equal to the first anti-jerk torque comprises:
controlling the torque output by the motor based on the normal target torque;
in response to the first anti-jerk torque being greater than the target torque, increasing the target torque according to the specified ascending gradient to obtain the target torque increased for a first time, and controlling the torque output by the motor based on the target torque increased for the first time; and
increasing the target torque increased for an (n-1)^{th} time according to the specified ascending gradient to obtain the target torque increased for an n^{th} time (n > 2), until the target torque increased for the n^{th} time is equal to the first anti-jerk torque, and controlling the torque output by the motor based on the target torque increased for the n^{th} time.

5. The electric drive anti-jerk control method according to claim 1, wherein the vehicle comprises a wheel end corresponding to the motor, and the motor is configured to drive the corresponding wheel end; and
in response to the motor being in the upward zero-crossing state, determining the second anti-jerk torque based on the minimum value among the first anti-jerk torque, the upward zero-crossing torque, and the wheel speed difference anti-jerk torque and controlling the torque output by the motor according to the second anti-jerk torque comprise:
in response to the motor being in the upward zero-crossing state, calibrating an upward zero-crossing torque gradient based on the actual torque of the motor and the vehicle's speed, the upward zero-crossing torque gradient being positively correlated with the vehicle's speed;
calculating a product of the upward zero-crossing torque gradient and a step time, and determining a sum of the actual torque of the motor and the product as the upward zero-crossing torque;
determining the wheel speed difference anti-jerk torque based on a speed difference of the wheel end corresponding to the motor, the wheel speed difference anti-jerk torque being negatively correlated with the speed difference of the wheel end corresponding to the motor;
determining the minimum value among the first anti-jerk torque, the upward zero-crossing torque, and the wheel speed difference anti-jerk torque as the second anti-jerk torque; and
controlling the torque output by the motor according to the second anti-jerk torque.

6. The electric drive anti-jerk control method according to claim 1, wherein, in response to the motor being in the downward zero-crossing state, determining the third anti-jerk torque based on the maximum value among the target torque of the motor and the downward zero-crossing torque and controlling the torque output by the motor according to the third anti-jerk torque comprise:
in response to the motor being in the downward zero-crossing state, calibrating a downward zero-crossing torque gradient based on the actual torque of the motor and the vehicle's speed, the downward zero-crossing torque gradient being positively correlated with the vehicle's speed;
calculating a product of the downward zero-crossing torque gradient and a step time, and determining a difference between the actual torque of the motor and the product as a downward zero-crossing target torque;
determining a maximum value among the second anti-jerk torque and the downward zero-crossing target torque as the third anti-jerk torque; and
controlling the torque output by the motor according to the third anti-jerk torque.

7. The electric drive anti-jerk control method according to claim 1, wherein controlling the torque output by the motor based on the target torque of the motor comprises:
determining a speed fluctuation denoising torque based on a fluctuation speed difference of the motor and a direction of change of the motor's speed, the fluctuation speed difference of the motor being a difference between an actual speed of the motor and a desired speed, the speed fluctuation denoising torque being configured to remove high-frequency jerking of the motor's speed, when the motor's speed is higher than a specified threshold, the speed fluctuation denoising torque being positive, and when the motor's speed is lower than the specified threshold, the speed fluctuation denoising torque being negative;
determining a difference between the target torque of the motor and the speed fluctuation denoising torque as a fourth anti-jerk torque; and
controlling the torque output by the motor according to the fourth anti-jerk torque;
controlling the torque output by the motor according to the second anti-jerk torque comprises:
determining a difference between the second anti-jerk torque and the speed fluctuation denoising torque as the fourth anti-jerk torque; and
controlling the torque output by the motor according to the fourth anti-jerk torque; and
controlling the torque output by the motor according to the third anti-jerk torque comprises:
determining a difference between the third anti-jerk torque and the speed fluctuation denoising torque as the fourth anti-jerk torque; and
controlling the torque output by the motor according to the fourth anti-jerk torque.

8. The electric drive anti-jerk control method according to claim 7, wherein controlling the torque output by the motor according to the fourth anti-jerk torque comprises:
performing low-pass filtering on the fourth anti-jerk torque, and controlling the motor to output the fourth anti-jerk torque after low-pass filtering.

9. An electric drive anti-jerk control module, comprising:
a first determining submodule configured to determine a first anti-jerk torque based on a maximum value among a torque corresponding to an operating condition of a vehicle and a gear torque, the operating condition of the vehicle comprising a driving condition, a recovery condition, and a braking condition, and the gear torque being a torque preset to limit a clearance in the motor's gears;
a first control output submodule configured to, in response to a target torque of the motor being unequal to the first anti-jerk torque, control a torque output by the motor based on the target torque of the motor, and adjust the target torque of the motor according to a specified gradient until the target torque of the motor is equal to the first anti-jerk torque, the target torque of the motor being a torque corresponding to the driving condition or the recovery condition of the motor;
a second determining submodule configured to, in response to the target torque of the motor being equal to the first anti-jerk torque, determine whether the motor is in an upward zero-crossing state or a downward zero-crossing state according to an actual torque of the motor;
a second control output submodule configured to, in response to the motor being in the upward zero-crossing state, determine a second anti-jerk torque based on a minimum value among the first anti-jerk torque, an upward zero-crossing torque, and a wheel speed difference anti-jerk torque, and control the torque output by the motor according to the second anti-jerk torque, the upward zero-crossing torque being a dynamic torque of the motor in the upward zero-crossing state, and the wheel speed difference anti-jerk torque being a torque preset to compensate for jerking caused by wheel speed differences;
a third control output submodule configured to, in response to the motor being in the downward zero-crossing state, determine a third anti-jerk torque based on a maximum value among the target torque of the motor and a downward zero-crossing torque, and control the torque output by the motor according to the third anti-jerk torque, the downward zero-crossing torque being a dynamic torque of the motor in the downward zero-crossing state; and
a fourth control output submodule configured to, in response to the motor not being in the upward zero-crossing state and the downward zero-crossing state, control the torque output by the motor based on the target torque of the motor.

10. A vehicle, comprising the electric drive anti-jerk control module according to claim 9, and further comprising a torque control chain, the torque control chain comprising an electric drive torque management unit, and the electric drive anti-jerk control module being nested in the electric drive torque management unit.

11. A computer storage medium having at least one instruction, at least one program, a code set, or an instruction set stored therein, wherein the at least one instruction, the at least one program, the code set, or the instruction set is loaded and executed by a motor control unit to implement the electric drive anti-jerk control method according to any one of claims 1 to 8.
